# EUROPEAN PATENT APPLICATION

(11) **EP 1 946 821 A1**
(43) Date of publication of application: **23.07.2008**
(21) Application number: 06822063.1
(22) Date of filing: 23.10.2006
(51) Int. Cl.: B01D 61/42, C25B 7/00

(54) **METHOD FOR PRODUCING FINE PARTICLES OF SALT, HYDROXIDE OR OXIDE, AND FINE PARTICLES OF SALT, HYDROXIDE OR OXIDE PRODUCED BY SUCH METHOD**

(30) Priority: 27.10.2005 JP 2005313215; 27.12.2005 JP 2005375017; 16.06.2006 JP 2006167398
(71) Applicant: Nisshinbo Industries, Inc., Chuo-ku, Tokyo 103-8650 (JP)
(72) Inventor: HORIGUCHI, Shinichi, Chiba-shi, Chiba 267-0056 (JP); OOSHIMA, Yasuhiro, Chiba-shi, Chiba 267-0056 (JP); ARIZONO, Jyunichi, Chiba-shi, Chiba 267-0056 (JP)
(74) Representative: Leifert & Steffan
(86) International application number: PCT/JP2006/321043
(87) International publication number: WO 2007/049549

(57) **Abstract**

The present invention provides a process for producing fine particles of a salt, hydroxide or oxide, wherein when producing the salt, hydroxide or oxide by electrodialysis using anion exchange membranes and cation exchange membranes, a conductive liquid acting as a poor solvent for the salt, hydroxide or oxide which is produced in a concentration chamber is used as a concentration chamber solution, as well as the fine particles of the salt, hydroxide or oxide which are produced by the above process.

## Description

### TECHNICAL FIELD

The present invention relates to a process for producing fine particles of salts, hydroxides or oxides which are usable as optical materials, catalysts, pigments, materials of electronic devices, magnetic materials, flame retardants, deodorizing and antibacterial agents, drugs, abrasive materials and various fillers, and a process for producing fine particles of salts, hydroxides or oxides for recovering rare metals, etc., in the form of a solid, from waste liquors or waste water, and more particularly to a process for producing fine particles of salts, hydroxides or oxides in which a conductive liquid acting as a poor solvent for the salts, hydroxides or oxides which are produced at least in a concentration chamber by electrodialysis is used as a concentration chamber solution, and a liquid containing an ion liquid is used as the concentration chamber solution.
Further, the present invention also relates to fine particles of the salts, hydroxides or oxides produced by the above production process.
Meanwhile, the "fine particles" used in the present invention mean those particles having a number-average particle size of from 1 nm to 1 µm as measured by dispersing the particles in a solvent, using a laser diffraction type particle size distribution analyzer, or those particles kept in the form of particles upon drying which have a specific surface area of from 1 to 1000 m²/g as measured by a BET multipoint method.

### BACKGROUND ART

The electrodialysis is generally such a method for desalting an electrolytic solution in which a direct current flows through cation exchange membranes and anion exchange membranes which are arranged alternately, to allow cations and anions present in a chamber (desalting chamber) formed between the adjacent cation and anion exchange membranes to be separately moved therethrough.
With the alternate arrangement of a number of the cation exchange membranes and anion exchange membranes, the desalting chambers and concentration chambers (in which the cations or anions moved from the desalting chambers are present in a concentrated state), are formed alternately.

It is known that the electrodialysis is used in the applications such as production of common salt by concentration of seawater, removal of metal ions, desalting of whey and proteins, production of low-salt soy sources, desalination of underground brine and denitrification of nitrified ground water.
In any of the above applications, the aimed product to be recovered is in the form of an aqueous solution. For example, in the production of common salt by concentration of seawater, the resultant concentration chamber solution (brine) must be subjected to distillation process, etc., to recover sodium chloride therefrom.
Thus, upon production of the common salt by electrodialysis, it is not possible to directly recover the objective salt in the form of a solid.

There are conventionally known the following methods for producing fine particles of metal salts, metal hydroxides and metal oxides. However, these methods have respective problems.
As the gas-phase chemical production method, there is known a so-called chemical vapor deposition (CVD) in which a volatile metal compound is thermally decomposed, or a volatile metal compound or a metal vapor is reacted with the other gas.
For example, an electric furnace method, a chemical flame method, a plasma method, etc., are known as the gas-phase chemical production method. However, these methods are deteriorated in productivity owing to need of a very large amount of heat energy.
As the liquid-phase chemical production method, there is known the method of crystallizing and precipitating metal ions by utilizing a precipitation reaction, a hydrothermal reaction, etc., or the method of transforming metal ions into metal oxides by sintering.
Specific examples of the liquid-phase chemical production method include a homogeneous precipitation method, a compound precipitation method, an alkoxide method and a hydrothermal method.
Meanwhile, examples of the hardly water-soluble metal salts include metal hydroxides, metal carbonates and metal oxalates. However, in these conventional methods, the purity of products obtained thereby is limited to only a low level because a large amount of unnecessary residual ions remain in the reaction system.
In addition, since the sintering step is inevitably required for producing the metal oxides, there tends to arise such a problem that the metal oxide particles are agglomerated together owing to the sintering.
As the liquid-phase physical production method, there are known the method of crystallizing and precipitating metal ions by utilizing change in temperature of a solution, and the method of obtaining fine particles of metal oxides by utilizing spraying or spray combustion of a solution to remove a solvent therefrom.
Specific examples of the liquid-phase physical production method include a spraying method, a solution combustion method and a freeze-drying method.
However, these conventional methods tend to suffer from problems such as large variation in particle size of the obtained particles and occurrence of segregation of the fine particles.

As the solid-phase production method using a pulverization procedure, there is known a so-called pulverization method in which an impact force or a striking force is applied to materials to be pulverized.
Examples of the pulverization method include a jet method, a hammer method and a milling method.
However, in these conventional methods, the obtained particles tend to be considerably varied in particle size, resulting in production of only limited particles having a particle size of from 1 to 3 µm at best, and further tend to be contaminated owing to abrasion of a substrate, resulting in deteriorated quality thereof.
Also, as the solid-phase production method using a crystallization procedure, there is known a so-called crystallization method in which a fresh solid phase is produced from another solid phase or two other solid phases.
Specific examples of the crystallization method include methods using a transition reaction, a solid solution method, a bonding reaction, a topotactic reaction, etc.
However, in these conventional methods, starting materials used therein must have a high purity and a uniform fine particle size, resulting in industrially unsuitable methods.
As described above, the salts, hydroxides and oxides obtained by these conventional methods all tend to be in the form of particles having a large particle size and deteriorated in productivity, thereby failing to meet the requirements for producing fine particles of the salts, hydroxides and oxides.

On the other hand, Patent Document 1 discloses metal oxides having a specific surface area of 100 m²/g or larger which are produced by surface modification using a surface treating agent such as typically an alkoxysilane. The metal oxides have an increased specific surface area, but a primary particle size of the metal oxides is not sufficiently reduced despite of the increased specific surface area.
Thus, the above conventional methods have failed to produce such metal oxides having a primary particle size of 50 nm or less and a specific surface area of 100 m²/g or larger in a synthesis stage thereof.

Patent Document 1: JP 2003-54915A

### DISCLOSURE OF THE INVENTION

The present invention has been made in view of various problems encountered in the above conventional methods. An object of the present invention is to provide a process for producing uniform and homogeneous fine particles of salts, hydroxides or oxides by electrodialysis with a good simplicity and an excellent productivity; the production process capable of recovering metal ions as a solid directly from waste water generated in effluent treatments such as waste liquors upon denitration, plating solutions and spent acids; and fine particles of the salts, hydroxides or oxides produced by the above processes.

As a result of extensive researches for achieving the above object, the present inventors have found that when using, as a concentration chamber solution, a conductive liquid acting as a poor solvent for the salts, hydroxides or oxides produced in a concentration chamber, a reaction product obtained by reacting a metal ion with various anions or a hydroxide ion can be precipitated in the form of fine particles of metal salts or metal hydroxides having a small particle size, because the concentration chamber solution acts as a poor solvent for the reaction product.
In addition, it has been found that hydroxide of transition elements are spontaneously oxidized by oxygen present in the reaction system in the course of a synthesis thereof to thereby readily produce oxides of the transition elements.
Further, in accordance with the present invention, it has been found that salts, hydroxide or oxides produced have an extremely small primary particle size of 50 nm or smaller as measured by a small angle X-ray scattering method, and a specific surface area of 100 m²/g or larger as measured by a BET multipoint method. The present invention has been accomplished on the basis of the above findings.

Thus, the present invention provides the following aspects:
1. A process for producing fine particles of a salt, hydroxide or oxide, wherein when producing the salt, hydroxide or oxide by electrodialysis using anion exchange membranes and cation exchange membranes, a conductive liquid acting as a poor solvent for the salt, hydroxide or oxide which is produced in a concentration chamber is used as a concentration chamber solution.
2. The process as defined in the above aspect 1, wherein the concentration chamber solution is a liquid exhibiting an electrical conductivity at a temperature of from -10°C to 100°C.
3. The process as defined in the above aspect 1 or 2, wherein a solubility of the salt, hydroxide or oxide which is produced in the concentration chamber, in the concentration chamber solution as measured at a temperature used upon the electrodialysis is 10 g/100 g or less.
4. The process as defined in any one of the above aspects 1 to 3, wherein the concentration chamber solution is a liquid containing an ion liquid.
5. The process as defined in the above aspect 4, wherein the ion liquid is diethylmethyl(2-methoxyethyl)ammonium-bis(trifluoromethanesulfonyl)imide, 1-butyl-3-methylimidazolium-bis(trifluoromethanesulfonyl)imide, tetraoctylammoniumdodecyl sulfate, or diethylmethyl(2-methoxyethyl) ammonium chloride.
6. The process as defined in the above aspect 4 or 5, wherein the liquid containing the ion liquid is a solution containing the ion liquid in an amount of 5% by mass or more.
7. The process as defined in the above aspect 6, wherein the liquid containing the ion liquid is a solution containing a C₁ to C₃ lower alcohol in an amount of 25% by mass or more.
8. The process as defined in any one of the above aspects 4 to 6, comprising the steps of adding the C₁ to C₃ lower alcohol to the concentration chamber solution obtained after the electrodialysis; mixing the obtained mixture under stirring; and then separating the salt, hydroxide or oxide as produced, from the concentration chamber solution by filtration, centrifugal separation and/or heating.
9. The process as defined in any one of the above aspects 4 to 6, wherein the concentration chamber solution is a liquid containing a hydrophobic ion liquid, and a solubility in 20°C water of the salt, hydroxide or oxide which is produced in the concentration chamber is 10 g/100 g or less,
   said process comprising the steps of adding water to the concentration chamber solution obtained after the electrodialysis; mixing the resultant mixture under stirring; allowing the mixture to stand to separate the mixture into a phase of the concentration chamber solution and a water phase; and separating the salt, hydroxide or oxide which is transferred into the water phase, from the water phase by filtration, centrifugal separation and/or heating.
10. The process as defined in any one of the above aspects 4 to 6, wherein the concentration chamber solution is a liquid containing a hydrophobic ion liquid, and a solubility in 20°C water of the salt, hydroxide or oxide which is produced in the concentration chamber is 10 g/100 g or less,
   said process comprising the steps of first adding the C₁ to C₃ lower alcohol to the concentration chamber solution obtained after the electrodialysis; mixing the resultant mixture under stirring; then adding water to the mixture; mixing the mixture under stirring; allowing the mixture to stand to separate the mixture into a phase of the concentration chamber solution and a water phase; and separating the salt, hydroxide or oxide which is transferred into the water phase, from the water phase by filtration and/or heating.
11. The process as defined in the above aspect 7, wherein the salt, hydroxide or oxide is separated from the concentration chamber solution obtained after the electrodialysis by filtration, centrifugal separation and/or heating.
12. The process for producing the fine particles of the water-insoluble or hardly water-soluble salt, hydroxide or oxide as defined in the above aspect 9 or 10, wherein the water-insoluble or hardly water-soluble salt, hydroxide or oxide is a compound of an element selected from the group consisting of elements belonging to Group 2 and Groups 6 to 14 of the Periodic Table and lanthanoid elements.
13. The process as defined in any one of the above aspects 4 to 12, wherein the salt, hydroxide or oxide which is produced in the concentration chamber is a salt, hydroxide or oxide of an element selected from the group consisting of magnesium, manganese, iron, cobalt, nickel, silver, copper, zinc, aluminum, indium, tin and cerium.
14. The process as defined in any one of the above aspects 4 to 13, wherein the salt produced in the concentration chamber is a compound selected from the group consisting of a halide, a nitrate, a nitrite, a sulfate, a sulfite, a thiosulfate, a phosphate, an oxalate, a carbonate and an acetate.
15. The process as defined in the above aspect 14; wherein the salt produced in the concentration chamber is sodium chloride, potassium nitrate, calcium carbonate, calcium sulfate, barium carbonate, barium sulfate or calcium phosphate.
16. The process as defined in any one of the above aspects 4 to 15, wherein the salt, hydroxide or oxide has a number-average particle size of from 1 nm to 1 µm as measured by a laser diffraction method, or a specific surface area of from 1 to 1000 m²/g as measured by a BET multipoint method.
17. The fine particles of the salt, hydroxide or oxide produced by the process as defined in any one of the above aspects 4 to 16, wherein the fine particles of the salt, hydroxide or oxide have a specific surface area of 100 m²/g or larger as measured by a BET multipoint method, an average particle size of 50 nm or smaller as measured in a particle size distribution of the particles in terms of a volume thereof by subjecting a strength function of the particles obtained by a small-angle X-ray scattering method, to a fitting procedure using a non-linear method of least squares, and a variance of dispersion of the particle size distribution of 60% or less.
18. The fine particles as defined in the above aspect 17, wherein the salt, hydroxide or oxide is a compound of an element selected from the group consisting of elements belonging to Group 2 and Groups 6 to 14 of the Periodic Table and lanthanoid elements.
19. The fine particles as defined in the above aspect 17 or 18, wherein the oxide is copper (II) oxide.
20. The fine particles as defined in the above aspect 17 or 18, wherein the oxide is iron (III) oxide.
21. The fine particles as defined in the above aspect 17 or 18, wherein the oxide is trimanganese tetraoxide.

In accordance with the present invention, the following effects can be attained.
1. When conducting an electrodialysis by using as a concentration chamber solution, a liquid containing an ion liquid which acts as a poor solvent for salts, hydroxides or oxides which are produced in a concentration chamber, it is possible to readily produce fine particles of the salts, hydroxides or oxides having a number-average particle size of from 1 nm to 1 µm or a specific surface area of from 1 to 1000 m²/g with a high purity.
2. When feeding different two or more kinds of electrolytic solutions to respective desalting chambers to conduct an electrodialysis thereof, and then separating salts, hydroxides or oxides which are produced in a concentration chamber solution, from the concentration chamber solution, it is possible to produce fine particles of salts, hydroxides or oxides composed of combination of a cation and an anion which are different from those contained in the respective electrolytic solutions fed to the desalting chambers.
3. Since the ion liquid used as the concentration chamber solution is non-volatile, it is possible to use the concentration chamber solution for a long period of time. Further, the concentration chamber solution can be recovered and reused after separating the salts, hydroxides or oxides therefrom.
4. The fine particles of hydroxides of transition elements belonging to Groups 3 to 11 of the Periodic Table and lanthanoid elements are oxidized by dissolved oxygen in the concentration chamber by appropriately selecting the electrolysis conditions to thereby readily produce fine particles of oxide of the above elements.
5. Upon producing the salts, hydroxides or oxides, since the aimed products can be synthesized separately from unnecessary anions and cations by the electrodialysis, it is possible to obtain the products having a higher purity as compared to those obtained by ordinary syntheses conducted in a solution. Further, the procedure for washing the products can be simplified.
6. When nitrates produced are recovered by the process of the present invention after completion of nitration in a nitrogen removal step using microorganisms, the nitrates can be directly recovered from the reaction system, and a denitrification step can be omitted.

### BRIEF DESCRIPTION OF THE DRAWING

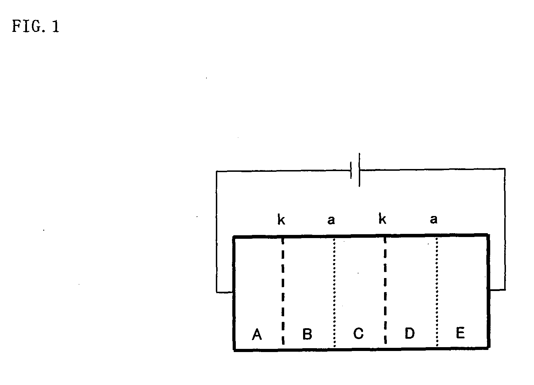

Fig. 1 is a schematic view showing an electrodialysis apparatus used in Example 1 according to the present invention.

### Explanation of Reference Numerals

k: Cation exchange membrane; a: Anion exchange membrane

### BEST MODE FOR CARRYING OUT THE INVENTION

The present invention is described in detail below.
The present invention relates to a process for producing salts by an electrodialysis using anion exchange membranes and cation exchange membranes, and fine particles of salts, hydroxides or oxides produced by the above production process.
Also, the present invention relates to a process for producing hydroxides or oxides by an electrodialysis using anion exchange membranes and cation exchange membranes, and fine particles of salts, hydroxides or oxides produced by the above production process.
Further, the process for producing oxides according to the present invention includes a process for producing the oxides via production of hydroxides.
In the electrodialysis used in the present invention, as the liquid being present in the concentration chamber (concentration chamber solution), there is used a conductive non-aqueous solution preferably having a solubility of 10 g/100 g or less which acts as a poor solvent for the salts, hydroxides or oxides which are produced in the concentration chamber.

Since the concentration chamber solution is usually kept at a temperature of from 5 to 50°C upon the electrodialysis, the concentration chamber solution is preferably a non-aqueous solution exhibiting a conductivity usually at a temperature of from -10 to 100°C.

The concentration chamber solution in the form of the non-aqueous solution having a conductivity as used in the present invention, is not particularly limited. Examples of the concentration chamber solution include non-aqueous solutions prepared by dissolving a solid electrolyte in an organic solvent, etc., and liquids containing an ion liquid.
The ion liquid is a series of compounds which are defined as a liquid composed of ions only and kept in a liquid state at a temperature of 100°C or lower. Examples of the ion liquid include those described in JP 2003-243028A, JP 2003-257476A, JP 2005-264209A and JP 2001-517205A.

More specifically, the ion liquid used in the present invention is not particularly limited, and any known ion liquid may be used in the present invention. However, in view of saving of energy and a good safety, the ion liquid is preferably a liquid exhibiting a conductivity at a temperature of from -10 to 100°C used upon the synthesis.
Examples of the cation contained in the ion liquid include an ammonium cation, a phosphonium cation and a sulfonium cation.
Specific examples of the ammonium cation include chain-like ammonium cations such as tetraethyl ammonium cation, tetraoctyl ammonium cation and diethylmethyl(2-methoxyethyl) ammonium cation (DEME); cyclic ammonium cations such as N-ethyl-N-methyl pyrrolidium, N-methoxyethyl-N-methyl pyrrolidium, N-methoxyethyl-N-methyl piperidium and N-ethyl-N-methyl-4-oxa-azaniacyclohexane; imidazolium cations such as 1-ethyl-3-methyl imidazolium (EMI) and 1-butyl-3-methyl imidazolium (BMI); and pyridinium cations such as butyl pyridinium.
Examples of the phosphonium cation include chain-like phosphonium cations such as tetraethyl phosphonium; and cyclic phosphonium cations such as phosphoniaspiro[4.4]nonane.
Examples of the sulfonium cation include chain-like sulfonium cations such as triethyl sulfonium; and cyclic sulfonium cations such as S-methyltetrahydrothiophenium and S-methyl-4-oxasulfoniacyclohexane.
Also, examples of an anion contained in the ion liquid include an amide anion, a methide anion, a borate anion, a phosphate anion, a sulfonate anion, a carboxylate anion and a halogen anion.
Specific examples of the amide anion include (CF₃SO₂)₂N⁻(TFSI], (C₂F₅SO₂)₂N⁻ and (CN)₂N⁻.
Specific examples of the methide anion include (CF₃SO₂)₃C⁻ and (C₂F₅SO₂)₃C⁻.
Specific examples of the borate anion include BF₄⁻, BF₃CF₃⁻ and BF₃CH₃⁻.
Specific examples of the phosphate anion include PF₆⁻.
Specific examples of the sulfonate anion include CH₃SO₃⁻, CF₃SO₃⁻ and CH₃(CH₂)₁₁SO₃⁻.
Specific examples of the carboxylate anion include HCOO⁻, CH₃COO⁻ and CF₃COO⁻.
Specific examples of the halogen anion include Cl⁻, Br⁻ and I⁻.
In the present invention, combination of the cation and the anion is not particularly limited. From the viewpoints of an adequate particle size, a good voltage resistance and a low viscosity, examples of the suitable ion liquid include hydrophobic ion liquids such as diethylmethyl(2-methoxyethyl)ammonium bis(trifluoromethanesulfonyl)imide (DEME-TFSI), 1-butyl-3-methylimidazolium bis(trifluoromethanesulfonyl)imide (BMI-TFSI), 1-ethyl-3-methylimidazolium bis(trifluoromethanesulfonyl)imide (EMI-TFSI) and tetraoctylammoniumdodecyl sulfate (TOADS).
The above ion liquids may be used alone or in the form of a mixture of any two or more thereof in order to control a particle size, a conductivity, a viscosity and various properties of the resultant product.

The liquid containing the ion liquid which constitutes the concentration chamber solution may be composed of either the ion liquid solely or a liquid mixture of the ion liquid and the other solvent as long as it acts as a poor solvent for the salts, hydroxides or oxides which are produced in the concentration chamber, and also exhibits a conductivity.
The other solvent may be non-compatible with the ion liquid or may be a solvent capable of forming a uniform phase as a whole by further adding an additional solvent to the ion liquid.
The content of the ion liquid is from 5 to 100% by mass, preferably from 10 to 100% by mass and more preferably from 20 to 100% by mass.
More specifically, from the viewpoint of a non-volatility of the liquid, preferred is the liquid composed of the ion liquid solely. If it is required to decrease the viscosity of the ion liquid to enhance a conductivity thereof, or if it is required to vary a particle size and surface properties of the salts, hydroxides or oxides as produced, the ion liquid may be diluted with an appropriate other solvent.
In this case, as a matter of course, the kind and amount of the solvent used should be selected so as to satisfy the condition that the solvent acts as a poor solvent for the salts, hydroxides or oxides as produced, as well as a good resistance to the electrodialysis membrane.
Examples of the other solvent include C₁ to C₃ lower alcohols, butanol, ethylene glycol, propylene glycol, 1,4-butanediol, glycerol, benzene, aniline, pyridine, chloroform, diethyl ether, ethyl acetate, water, tetrahydrofuran, dioxane, acetone, acetonitrile, dimethylformamide, dimethylacetamide, dimethylsulfoxide and propylene carbonate. Among these solvents, preferred are C₁ to C₃ lower alcohols.
Specific examples of the C₁ to C₃ lower alcohols include methyl alcohol, ethyl alcohol, n-propyl alcohol and isopropyl alcohol. Among these lower alcohols, preferred are methyl alcohol and ethyl alcohol.
When the C₁ to C₃ lower alcohols are used as the other solvent, the content of the C₁ to C₃ lower alcohols is from 25 to 95% by mass, preferably 40 to 90% by mass and more preferably from 50 to 80% by mass.
Also, for example, when selecting diethylmethyl(2-methoxyethyl)ammonium bis(trifluoromethanesulfonyl)imide (DEME-TFSI) as the ion liquid, ethylene glycol that is non-compatible with the ion liquid by itself as well as further ethanol may be added thereto to obtain a uniformly compatilized concentration chamber solution.
The other solvents described above may be used alone or in the form of a mixture of any two or more thereof in order to control of a dispersibility and various properties of the aimed product.

The concentration chamber solution used in the present invention may be mixed with a dispersant before and after the electrodialysis.
When adding the dispersant to the concentration chamber solution, the resultant salts, hydroxides or oxides can be enhanced in dispersibility, and can be prevented from being agglomerated together.
In order to further enhance the dispersibility of the resultant salts, hydroxides or oxides, it is preferred that the dispersant is previously dissolved in the concentration chamber solution before conducting the electrolysis.
The dispersant is not particularly limited as long as it can be dissolved in the concentration chamber solution. In order to suppress increase in membrane resistance, the dispersant is preferably hardly ionized in the concentration chamber solution.
Examples of these dispersants include higher fatty acids, higher fatty esters and nonionic surfactants such as polyethylene glycol.
Examples of the higher fatty acids include saturated fatty acids and unsaturated fatty acids. Specific examples of the higher fatty acids include stearic acid, isostearic acid, arachidonic acid, undecylenic acid, oleic acid, palmitic acid, behenic acid, myristic acid, lauric acid, lanolic acid, linoleic acid and linolenic acid.
Examples of the higher fatty esters include esters of the above saturated fatty acids and unsaturated fatty acids. Specific examples of the higher fatty esters include methyl stearate, methyl isostearate, methyl arachidonate, methyl undecylenate, methyl oleate, methyl palmitate, methyl behenate, methyl myristate, methyl laurate, methyl lanolate, methyl linolate and methyl linolenate.
Examples of the nonionic surfactants include polyethylene glycol, polypropylene glycol, polyvinyl alcohol, polyoxyethylene alkyl ethers, polyoxypropylene alkyl ethers, polyoxyethylene alkyl phenol ethers, glycerol, alkyl glycosides; polyoxyethylene fatty esters such as polyethylene glycol monostearate and polyethylene glycol distearate; sucrose fatty esters; sorbitan fatty esters; polyoxyethylene sorbitan fatty esters; and fatty acid alkanol amides.
The amount of the dispersant added is suitably a small amount in view of suppressing increase in the viscosity and attaining a good economy, and is usually from 0.01 to 5% by mass and preferably from 0.1 to 1% by mass on the basis of the concentration chamber solution.
It is considered that the dispersant is adsorbed on the surface of the resultant product. The dispersants may be used alone or in the form of a mixture of any two or more thereof in order to control surface properties of the particles (such as hydrophilicity and hydrophobicity) as well as a dispersibility thereof.

In the electrodialysis treatment of the present invention, the electrodialysis as a basic procedure thereof is the same as the conventional electrodialysis. Usually, many anion exchange membranes and many cation exchange membranes are alternately arranged with each other to provide many chambers each interposed between the adjacent anion and cation exchange membranes so as to alternately constitute desalting chambers and concentration chambers. Each desalting chamber is filled with an electrolytic solution to be treated, whereas each concentration chamber is filled with the conductive liquid, and then a direct current may be applied thereto under the conditions as aimed. However, the electrodialysis of the present invention is different from the conventional electrodialysis in that the non-aqueous conductive liquid acting as a poor solvent for the salts, hydroxides or oxides produced in the concentration chamber is used as the concentration chamber solution, and the salts, hydroxides or oxides are produced in the form of fine particles in the concentration chamber, if required, by separating the particles by the below-mentioned method.
More specifically, the cation transferred into the concentration chamber through one of the membranes and the anion transferred into the concentration chamber through the other of the membranes are reacted with each other and crystallized to produce the salts, hydroxides or oxides. At this time, since the concentration chamber solution acts as a poor solvent for the salts, hydroxides or oxides, the thus produced salts, hydroxides or oxides are suspended or precipitated in the solution, thereby producing fine particles of the salts, hydroxides or oxides, if required, by using the below-mentioned separation method.

The process for producing the fine particles of the salts, hydroxides or oxides can be applied to such an electrolytic solution in which a compound as a raw material selected from the group consisting of inorganic salts, organic salts, inorganic bases and organic bases is dissolved.
The raw material is not particularly limited as long as it is a compound capable of being ionized in the solution, because such a compound can be transferred or migrated through an ordinary ion exchange membrane.
Among these compounds, preferred are water-soluble salts or bases.
Examples of the inorganic salts and the organic salts include halides, nitrates, nitrites, sulfates, sulfites, thiosulfates, phosphates, borates, oxalates, carbonates and acetates of elements belonging to Groups 1 and 2 and Groups 6 to 14 of the Periodic Table. Specific examples of the inorganic salts and the organic salts include lithium chloride, sodium chloride, potassium chloride, rubidium chloride, cesium chloride, beryllium chloride, calcium chloride, strontium chloride, barium chloride, chromium chloride, ruthenium chloride, cobalt chloride, rhodium chloride, nickel chloride, cadmium chloride, aluminum chloride, gallium chloride, indium chloride, tin chloride, magnesium nitrate, iron nitrate, cobalt nitrate, nickel nitrate, palladium nitrate, silver nitrate, copper nitrate, zinc nitrate, aluminum nitrate, indium nitrate, tin nitrate, cerium nitrate, mercury nitrate, beryllium sulfate, magnesium sulfate, manganese sulfate, iron sulfate, zinc sulfate, cobalt sulfate, nickel sulfate, silver sulfate, copper sulfate, aluminum sulfate, indium sulfate, tin sulfate, cerium sulfate, thallium sulfate, copper acetate, lead acetate and sodium citrate.
Among the inorganic salts as the raw material, preferred are nitrates and sulfates which are free from generation of halogen gases upon electrolysis thereof. These metal salts may be used alone or in the form of a mixture of any two or more thereof.
Examples of the inorganic bases and the organic bases include hydroxides of alkali metals and quaternary ammonium hydroxides. Specific examples of the inorganic bases and the organic bases include sodium hydroxide, potassium hydroxide, lithium hydroxide, rubidium hydroxide, cesium hydroxide, tetramethyl ammonium hydroxide, tetraethyl ammonium hydroxide and hydrazine.

When synthesizing hydroxides of transition elements belonging to Groups 3 to 11 of the Periodic Table and lanthanoid elements from inorganic salts thereof in the presence of a hydroxide ion, the resultant hydroxides are oxidized by dissolved oxygen in the course of the synthesis to thereby readily produce oxides of these elements.
When the hydroxides are not completely converted into the oxides, the conversion into the oxides may be accomplished, for example, by heating, reflux under heating, feed of oxygen, addition of an oxidizing agent such as hydrogen peroxide or addition of a dehydration accelerator such as sugars, e.g., glucose and starches.
When it is intended to produce the hydroxides only, the electrodialysis may be conducted at a low temperature in an inert gas such as nitrogen by using the method of shutting off feed of oxygen into the solution.
In the electrodialysis of the present invention, the concentration of the raw electrolyte in the electrode chambers and desalting chambers may be optionally varied. The concentration of the raw electrolyte is preferably determined in view of a transference number of each membrane (ion separation capability: usually about 99% or more; upon diffusion phenomenon of ions having a reverse charge, for example, when transferring a cation from a cation exchange membrane, 1% or less of anion is passed therethrough) as well as dialysis efficiency.
In addition, when two or more different kinds of electrolytic solutions as raw materials are respectively supplied into the separate different desalting chambers which are disposed alternately with the concentration chambers by alternately arranging many anion exchange membranes and many cation exchange membranes, and the electrodialysis is conducted therein, the salts, hydroxides or oxides composed of combination of a cation and an anion which are different from those in the electrolytic solutions fed to the respective desalting chambers can be produced in the concentration chambers, if required, followed by separating the salts, hydroxides or oxides, thereby making it possible to produce fine particles of the salts, hydroxides or oxides.
More specifically, when an electrolytic solution in which a salt, hydroxide or oxide composed of a cation A⁺ and an anion X⁻ is dissolved, and another electrolytic solution in which a salt, hydroxide or oxide composed of a cation B⁺ and an anion Y⁻ is dissolved, are fed to the respective desalting chambers disposed alternately with the concentration chambers to conduct the electrodialysis thereof, such a salt, hydroxide or oxide composed of a cation A⁺ and an anion Y⁻ is produced in one of the concentration chambers, and such a salt, hydroxide or oxide composed of a cation B⁺ and an anion X⁻ is produced in the other of the concentration chambers, if required, followed by separating the resultant salts, hydroxides or oxides, thereby making it possible to produce respective fine particles of the salts, hydroxides or oxides.
The "cation A⁺", "anion X⁻", "cation B⁺" and "anion Y⁻" used herein respectively mean not only a monovalent ion but also a polyvalent ion.
In such a case, the concentration chamber solutions used in the respective concentration chambers may be different from each other depending upon the salts, hydroxides or oxides to be produced therein.
The temperature of the concentration chamber solution upon the electrodialysis is usually from 5 to 50°C and preferably from 20 to 40°C.

The salts produced in the present invention (salts produced in the concentration chamber) are not particularly limited. Examples of the salts include inorganic salts and organic salts.
The inorganic salts are generally classified into water-soluble salts and water-insoluble or hardly water-soluble salts. Examples of the inorganic salts include halides, nitrates, nitrites, sulfates, sulfites, thiosulfates, phosphates, borates, oxalates, carbonates and acetates.
Specific examples of the water-soluble inorganic salts produced in the concentration chamber include lithium chloride, sodium chloride, potassium chloride, rubidium chloride, cesium chloride, beryllium sulfate, magnesium sulfate, calcium chloride, strontium chloride, barium chloride, chromium chloride, manganese sulfate, iron sulfate, ruthenium chloride, cobalt chloride, rhodium chloride, nickel chloride, palladium nitrate, copper acetate, silver nitrate, zinc sulfate, cadmium chloride, mercury nitrate, aluminum chloride, gallium chloride, indium chloride, thallium sulfate, tin chloride and lead acetate.
Specific examples of the water-insoluble or hardly water-soluble inorganic salts produced in the concentration chamber include calcium carbonate, barium carbonate, calcium sulfate, barium sulfate and calcium phosphate.
Also, as the organic salts, preferred are low-molecular organic metal salts. Specific examples of the low-molecular organic metal salts include sodium acetate and sodium citrate.

The hydroxides or oxides produced in the present invention (hydroxides or oxides produced in the concentration chamber) are not particularly limited, and preferably include metal hydroxides or metal oxides.
Examples of the metal hydroxides or metal oxides include hydroxides or oxides of elements belonging to Groups 2 and 6 to 14 of the Periodic Table and lanthanoid elements. Specific examples of the hydroxides include magnesium hydroxide, calcium hydroxide, strontium hydroxide, barium hydroxide, chromium hydroxide, manganese hydroxide, iron hydroxide, ruthenium hydroxide, cobalt hydroxide, rhodium hydroxide, nickel hydroxide, palladium hydroxide, copper hydroxide, zinc hydroxide, cadmium hydroxide, aluminum hydroxide, gallium hydroxide, indium hydroxide, thallium hydroxide, tin hydroxide, lead hydroxide and cerium hydroxide.
Also, specific examples of the oxides include magnesium oxide, calcium oxide, strontium oxide, barium oxide, chromium oxide, manganese oxide, iron oxide, ruthenium oxide, cobalt oxide, rhodium oxide, nickel oxide, palladium oxide, copper oxide, silver oxide, zinc oxide, cadmium oxide, mercury oxide, aluminum oxide, gallium oxide, indium oxide, thallium oxide, tin oxide, lead oxide and cerium oxide.
In particular, the hydroxides of elements belonging to Groups 3 to 11 of the Periodic Table and lanthanoid elements are readily oxidized by dissolved oxygen to produce oxides of these elements.
Among the above inorganic oxides, the oxides of manganese, iron, copper, zinc, cobalt, silver and cerium can be more readily produced.

The salts, hydroxides or oxides produced in the present invention can be identified by ordinarily known qualitative analysis methods such as measurement of infrared absorption spectrum, ion chromatography and powder X-ray diffraction.
In particular, the oxides produced from the hydroxides of manganese, iron, copper, cobalt and cerium can be identified by change in corresponding color tone, powder X-ray diffraction, etc.
The average particle size of the salts, hydroxides or oxides produced in the present invention is usually from 1 nm to 1 µm and preferably from 1.0 nm to 0.5 µm in terms of a number-average particle size as measured in a dispersion thereof using a laser diffraction type particle size distribution analyzer.
In addition, the specific surface area of the salts, hydroxides or oxides in the form of dried particles is usually from 1 to 1000 m²/g, preferably from 5 to 1000 m²/g and more preferably from 20 to 1000 m²/g as measured by a BET multipoint method.
Further, in accordance with the present invention, the salts, hydroxides or oxides having a specific surface area of from 100 to 1000 m²/g can be suitably obtained.
Furthermore, the average particle size of the salts, hydroxides or oxides in the form of dried particles as measured by a small-angle X-ray scattering method is from 1 to 50 nm, and the variance of particle size distribution thereof is 60% or less.
The above average particle size is preferably from 1 to 30 nm and more preferably from 1 to 10 nm.
Upon the measurement using the laser diffraction type particle size distribution analyzer, the salts, hydroxides or oxides are dispersed in a poor solvent therefor.
More specifically, upon the measurement, the salts, hydroxides or oxides may be dispersed in a poor solvent therefor such as water, methyl ethyl ketone, alcohols and dimethylformamide.
The analysis of the particle size using the small-angle X-ray scattering method is described in detail below.
Usually, when the particle size is reduced to 100 nm or smaller, in particular, 50 nm or smaller, the particles (primary particles) in a powder or a dispersion tend to be present in the form of agglomerated particles (secondary particles).
In the particle size analysis using a laser having a wavelength in a visible range (200 to 2000 nm), the particles having a particle size corresponding to the wavelength are detected.
More specifically, the primary particles having a particle size of 100 nm or smaller tend to be observed as the agglomerated secondary particles (having a large apparent particle size), thereby causing such a problem that the particle size of the inherent particles is hardly detected.
On the other hand, in the small-angle X-ray scattering method using an X-ray, it is possible to detect a light scattered from the particles having a particle size of 100 nm or smaller, in particular, 50 nm or smaller, thereby enabling the particle size of the primary particles to be detected without adverse influence of the agglomerated particles.
Thus, X-ray scattering method is an analysis method capable of apparently detecting characteristics of the fine particles of the salts, hydroxides or oxides obtained by the production process according to the present invention.
In the particle size analysis, a profile of the X-ray scattering intensity of the particles as a function of the scattering angle (usually from 0.2° to 6.0°) is attained and compared with a theoretical profile thereof which is attained assuming that the particles are of a spherical shape, and then subjected to a fitting procedure using a non-linear method of least squares, thereby preparing a particle size distribution of the particles to be analyzed.
The thus prepared particle size distribution is analyzed by a statistic method to determine an average particle size of the particles as well as a variance thereof as an index of spread of the particle sizes.

In the present invention, as described above, the salts, hydroxides or oxides which are produced in the concentration chamber are suspended or precipitated in the form of a solid in the concentration chamber solution. The salts, hydroxides or oxides thus suspended or precipitated may be separated from the concentration chamber solution by the methods such as filtration, centrifugal separation and/or heating.
When using the filtration or centrifugal separation, the resultant product was washed with an adequate solvent, followed by being optionally concentrated, and then dried, thereby producing the salts, hydroxides or oxides as aimed.
When using the heating, the concentration chamber solution is volatilized at an adequate temperature at which no deterioration of the salts, hydroxides or oxides is caused, thereby producing the salts, hydroxides or oxides as aimed.
When the oxides are the aimed product, the hydroxides may be heated at a temperature not lower than a dehydration temperature thereof according to the metal contained therein.
These separating methods, i.e., the filtration, centrifugal separation and heating, may be used in combination of any two or more thereof.
In addition, as an alternate separating method, there may be used such a method in which the concentration chamber solution containing the thus produced salts, hydroxides or oxides is mixed with a solvent in which the salts, hydroxides or oxides are hardly dissolved, to precipitate or agglomerate the salts, hydroxides or oxides, and then the resultant mixture is subjected to filtration, centrifugal separation and/or heating to separate the salts, hydroxides or oxides therefrom.
The solvent in which the salts, hydroxides or oxides are hardly dissolved is not particularly limited, and the kind and amount of the solvent may be selected so as to satisfy the requirement that the produced salts, hydroxides or oxides are hardly dissolved therein.
Also, the method of precipitating or agglomerating the salts, hydroxides or oxides is not particularly limited, and there may be usually used such a treating method of stirring the obtained mixture and then allowing the mixture to stand, etc.

Specific examples of the separating methods are described below.
(a) In the case where the concentration chamber solution is the liquid containing the ion liquid especially in an amount of 5% by mass or more, and the salts, hydroxides or oxides produced in the concentration chamber are water-soluble, there is preferably used the method of adding a C₁ to C₃ lower alcohol to the concentration chamber solution obtained after the electrodialysis, mixing the resultant mixture under stirring, and then subjecting the mixture to filtration, centrifugal separation and/or heating to separate the mixture into the salts, hydroxides or oxides and the concentration chamber solution.
(b) In the case where the concentration chamber solution is the liquid containing the ion liquid especially in an amount of 5% by mass or more, and the salts, hydroxides or oxides produced in the concentration chamber are water-insoluble or hardly water-soluble, there are preferably used the method of adding water to the concentration chamber solution obtained after the electrodialysis, mixing the resultant mixture under stirring, allowing the mixture to stand to separate the mixture into a concentration chamber solution phase and a water phase, and thereafter subjecting the obtained water phase to filtration, centrifugal separation and/or heating to separate the salts, hydroxides or oxides transferred into the water phase therefrom; and the method of first adding a C₁ to C₃ lower alcohol to the concentration chamber solution obtained after the electrodialysis, mixing the resultant mixture under stirring, adding water to the mixture, mixing the obtained mixture under stirring, allowing the mixture to stand to separate the mixture into a concentration chamber solution phase and a water phase, and then subjecting the obtained water phase to filtration and/or heating to separate the salts, hydroxides or oxides transferred into the water phase therefrom.
(c) In the case where the concentration chamber solution is the ion liquid containing a C₁ to C₃ lower alcohol in an amount of 25% by mass or more, there is preferably used the method of subjecting the concentration chamber solution obtained after the electrodialysis to filtration, centrifugal separation and/or heating to separate the salts, hydroxides or oxides therefrom.
Meanwhile, examples of the C₁ to C₃ lower alcohol include methyl alcohol, ethyl alcohol, n-propyl alcohol and isopropyl alcohol. Among these alcohols, preferred are methyl alcohol and ethyl alcohol.
By conducting the above methods, it is possible to readily separate the fine particles of the salts, hydroxides or oxides with a high purity.
In addition, when subjecting the resultant hydroxides to heat treatment at a suitably selected temperature, fine particles of oxides, for example, those oxides corresponding to the hydroxides can be produced.
Also, when subjecting the hydroxides produced in the concentration chamber solution to reflux under heating at an appropriate temperature, it is possible to produce fine particles of oxides which are suppressed in growth of particles.
Further, when oxidizing the hydroxides produced in the concentration chamber solution by using an appropriate oxidizing agent, it is also possible to produce fine particles of oxides corresponding to the hydroxides.
Similarly, when reducing the resultant hydroxides or oxides by using an appropriate reducing agent, it is also possible to produce fine particles of metals corresponding to those contained in the hydroxides or oxides.

### EXAMPLES

The present invention will be described in more detail below by referring to the following examples. However, it should be noted that these examples are only illustrative and not intended to limit the invention thereto.

### EXAMPLE 1

Five polypropylene spacers each having an opening of 40 mm x 60 mm and a thickness of 5 mm were disposed in an overlapped relation to each other in a length direction thereof so as to allow the openings to communicate with each other, and platinum electrodes each having a size of 40 mm x 60 mm was fitted to opposite ends of the overlapped spacers, and respective chambers formed therein were closed, thereby forming an electrodialysis apparatus constituted from five vessels including a vessel A (electrode chamber), a vessel B (desalting chamber), a vessel C (concentration chamber), a vessel D (desalting chamber) and a vessel E (electrode chamber).
A communicating portion between the vessels A and B and a communicating portion between the vessels C and D were respectively fitted with a cation exchange membrane "CMX-SB" (tradename) available from Atoms Co., Ltd., whereas a communicating portion between the vessels B and C and a communicating portion between the vessels D and E were respectively fitted with an anion exchange membrane "AHA" (tradename) available from Atoms Co., Ltd.
The respective spacers were provided at a top and bottom thereof with openings each having a diameter of 3.5 mm to connect the chambers to circulation lines independently provided therefor.
The vessels A and E were charged with a 0.28 mol/L Na₂SO₄ aqueous solution; the vessel B was charged with a 0.5 mol/L NaOH aqueous solution; the vessel C was charged with an ethyl alcohol solution containing 25% by mass of N,N-diethylmethyl-N-(2-methoxyethyl)ammonium ·bis(trifluoromethanesulfony 1)imide (DEME-TFSI); density ρ: 1.42 g/cm³ (20°C); viscosity η: 0.12 Pa·s (20°C); conductive); and the vessel D was charged with a 0.25 mol/L MgSO₄ aqueous solution. The respective solutions to be charged into the above chambers were fed from a liquid reservoir storing 100 mL of each solution through the circulation line.
A schematic view of the thus constructed apparatus is shown in Fig. 1.
After it was confirmed that a pH of the liquids in the respective vessels except for the vessel C was near 7, the temperature of the concentration chamber solution was controlled to from 20 to 25°C, and a D.C. voltage of 5 V was applied to the apparatus over 3 h. Meanwhile, the current value during applying the D.C. voltage was from 20 to 200 mA.
About 10 minutes after applying the D.C. voltage, the concentration chamber solution became whitely turbid (white precipitates occurred).
The whitely turbid DEME-TFSI ethyl alcohol solution obtained by the electrodialysis was subjected to filtration under reduce pressure using an OMNIPORE membrane filter (pore size: 0.45 µm) available from Nippon Milli-Pore Co., Ltd., thereby obtaining a white product.
The thus obtained white product was dispersed in 25 mL of methyl alcohol by ultrasonic irradiation.
The resultant dispersion was subjected to filtration under reduce pressure using the above OMNIPORE membrane filter to separate the DEME-TFSI attached to the white product.
After further repeating the above procedure for washing the white product two times, the product was dried at 100°C for 3 h, thereby obtaining white particles.
As a result of the measurement of infrared absorption spectrum, it was confirmed that the thus obtained white particles were magnesium hydroxide [Mg(OH)₂].
After subjecting 0.1 g of the magnesium hydroxide particles to deaeration treatment at 100°C for 3 h, by using a specific surface area measuring apparatus "TRYSTAR 3000" available from Shimadzu Seisakusho Co., Ltd., a nitrogen gas was adsorbed on the surface of the sampled particles, and the specific surface area thereof was measured by a BET multipoint method. As a result, it was confirmed that the specific surface area of the magnesium hydroxide particles was 450 m²/g.
The results are shown in Table 1.

### EXAMPLE 2

The electrodialysis and post treatments were carried out in the same manner as in Example 1 except for using a 0.25 mol/L FeSO₄ aqueous solution in the vessel D, thereby obtaining iron (III) oxide [Fe₂O₃] which was produced by oxidizing the hydroxide obtained in the electrodialysis with dissolved oxygen.
The identification of the obtained product was performed by a powder X-ray diffraction method. In addition, the specific surface area of the product was measured by the same method as used in Example 1.
The results are shown in Table 1.
The thus obtained iron (III) oxide particles were measured using a small-angle X-ray scattering apparatus "RINT-TTR" available from Rigaku Co., Ltd., under the following conditions:
Scatterer Model: Sphere
Measuring Method: Transmission Method
Matrix: Air
Analyzing Range: 0.200° to 6.000°
Step: 0.010°
Wavelength: 1.5418 Å.
As a result, it was confirmed that the obtained iron oxide particles had an average particle size of 20.8 nm and a variance of particle size distribution of 59.8%.

### EXAMPLE 3

The electrodialysis and post treatments were carried out in the same manner as in Example 1 except for using a 0.25 mol/L CuSO₄ aqueous solution in the vessel D, thereby obtaining copper (II) oxide [CuO] which was produced by oxidizing the hydroxide obtained in the electrodialysis with dissolved oxygen.
The identification of the obtained product was performed by a powder X-ray diffraction method. In addition, the specific surface area of the product was measured by the same method as used in Example 1.
The results are shown in Table 1.
The subsequent procedure was conducted in the same manner as in Example 2 except for using the thus obtained copper (II) oxide particles. As a result, it was confirmed that the obtained copper oxide particles had an average particle size of 9.65 nm and a variance of particle size distribution of 55.6%.

### EXAMPLE 4

The electrodialysis and post treatments were carried out in the same manner as in Example 1 except for using a 0.25 mol/L ZnSO₄ aqueous solution in the vessel D, thereby obtaining zinc oxide [ZnO] which was produced by oxidizing the hydroxide obtained in the electrodialysis with dissolved oxygen.
The identification of the obtained product was performed by a powder X-ray diffraction method. In addition, the specific surface area of the product was measured by the same method as used in Example 1.
The results are shown in Table 1.

### EXAMPLE 5

The same procedure as in Example 1 was carried out except for using a 0.17 mol/L AlCl₃ aqueous solution in the vessel D, thereby obtaining aluminum hydroxide [Al(OH)₃].
The specific surface area of the product was measured by the same method as used in Example 1. The results are shown in Table 1.

### EXAMPLE 6

The same procedure as in Example 1 was carried out except for using a 0.125 mol/L In₂(SO₄)₃ aqueous solution in the vessel D, thereby obtaining indium hydroxide [In(OH)₃].
The specific surface area of the product was measured by the same method as used in Example 1. The results are shown in Table 1.

### EXAMPLE 7

The same procedure as in Example 1 was carried out except for using a 0.25 mol/L SnCl₂ aqueous solution in the vessel D, thereby obtaining tin hydroxide [Sn(OH)₂].
The specific surface area of the product was measured by the same method as used in Example 1. The results are shown in Table 2.

### EXAMPLE 8

The same procedure as in Example 1 was carried out except for using a 0.25 mol/L Ni(CH₃COO)₂ aqueous solution in the vessel D, thereby obtaining nickel hydroxide [Ni(OH)₂].
The specific surface area of the product was measured by the same method as used in Example 1. The results are shown in Table 2.

### EXAMPLE 9

The electrodialysis and post treatments were carried out in the same manner as in Example 1 except for using a 0.25 mol/L CoCl₂ aqueous solution in the vessel D, thereby obtaining cobalt (III) oxide [Co₂O₃] which was produced by oxidizing the hydroxide obtained in the electrodialysis with dissolved oxygen.
The identification of the obtained product was performed by a powder X-ray diffraction method. In addition, the specific surface area of the product was measured by the same method as used in Example 1.
The results are shown in Table 2.

### EXAMPLE 10

The electrodialysis and post treatments were carried out in the same manner as in Example 1 except for using a 0.5 mol/L AgNO₃ aqueous solution in the vessel D, thereby obtaining silver oxide [Ag₂O] which was produced by oxidizing the hydroxide obtained in the electrodialysis with dissolved oxygen.
The identification of the obtained product was performed by a powder X-ray diffraction method. In addition, the specific surface area of the product was measured by the same method as used in Example 1.
The results are shown in Table 2.

### EXAMPLE 11

The electrodialysis and post treatments were carried out in the same manner as in Example 1 except for using a 0.125 mol/L CeCl₃ aqueous solution in the vessel D, thereby obtaining cerium (III) oxide [Ce₂O₃] which was produced by oxidizing the hydroxide obtained in the electrodialysis with dissolved oxygen.
The identification of the obtained product was performed by a powder X-ray diffraction method. In addition, the specific surface area of the product was measured by the same method as used in Example 1.
The results are shown in Table 2.

### EXAMPLE 12

The electrodialysis and post treatments were carried out in the same manner as in Example 1 except for using a 0.25 mol/L MnSO₄ aqueous solution in the vessel D, thereby obtaining trimanganese tetraoxide [Mn₃O₄] which was produced by oxidizing the hydroxide obtained in the electrodialysis with dissolved oxygen.
The identification of the obtained product was performed by a powder X-ray diffraction method. In addition, the specific surface area of the product was measured by the same method as used in Example 1.
The results are shown in Table 2.
Next, the same procedure as in Example 2 was carried out except for using the above obtained trimanganese tetraoxide particles. As a result, it was confirmed that the trimanganese tetraoxide particles had an average particle size of 9.55 nm and a variance of particle size distribution of 55.0%.
Then, 0.2 g of the above obtained trimanganese tetraoxide particles was oxidized with 50 mL of 5% by mass hydrogen peroxide, thereby obtaining manganese (IV) dioxide [MnO₂].
The specific surface area of the thus obtained manganese (IV) dioxide particles was measured by the same method as used in Example 1. As a result, it was confirmed that the manganese (IV) dioxide particles had a specific surface area of 150 m²/g.

**TABLE 1-1**

| | Examples | | |
|---|---|---|---|
| | 1 | 2 | 3 |
| Appearance of vessel C after applying D.C. voltage | White precipitates | Black precipitates | Dark brown precipitates |
| Product | Mg(OH)₂ | Fe₂O₃ | CuO |
| Specific surface area (m²/g) | 450 | 200 | 110 |

**TABLE 1-2**

| | Examples | | |
|---|---|---|---|
| | 4 | 5 | 6 |
| Appearance of vessel C after applying D.C. voltage | White precipitates | White precipitates | White precipitates |
| Product | ZnO | Al(OH)₃ | In(OH)₃ |
| Specific surface area (m²/g) | 110 | 200 | 230 |

**TABLE 2-1**

| | Examples | | |
|---|---|---|---|
| | 7 | 8 | 9 |
| Appearance of vessel C after applying D.C. voltage | White precipitates | Greenish white precipitates | Black precipitates |
| Product | Sn(OH)₂ | Ni(OH)₂ | Co₂O₃ |
| Specific surface area (m²/g) | 55 | 190 | 290 |

**TABLE 2-2**

| | Examples | | |
|---|---|---|---|
| | 10 | 11 | 12 |
| Appearance of vessel C after applying D.C. voltage | Dark brown precipitates | Yellow precipitates | Dark brown precipitates |
| Product | Ag₂O | Ce₂O₃ | Mn₃O₄ |
| Specific surface area (m²/g) | 8 | 195 | 198 |

### EXAMPLE 13

The electrodialysis and post treatments were carried out in the same manner as in Example 3 except for using an ethyl alcohol solution containing 25% by mass of tetraoctylammoniumdodecyl sulfate (TOADS) in the vessel C, thereby obtaining copper (II) oxide [CuO] which was produced by oxidizing the hydroxide obtained in the electrodialysis with dissolved oxygen.
The identification of the obtained product was performed by a powder X-ray diffraction method. In addition, the specific surface area of the product was measured by the same method as used in Example 1. As a result, it was confirmed that the copper (II) oxide had a specific surface area of 90 m²/g.

### EXAMPLE 14

Five resin containers each having a width of 40 mm, a length of 20 mm and a height of 45 mm were disposed in an overlapped relation to each other in a length direction thereof, thereby forming an electrodialysis apparatus constituted from five vessels including a vessel A (electrode chamber), a vessel B (desalting chamber), a vessel C (concentration chamber), a vessel D (desalting chamber) and a vessel E (electrode chamber).
The respective vessels were provided, at a center of an overlapped portion therebetween, with openings each having a width of 25 mm and a height of 20 mm which were communicated with each other. A communicating portion between the vessels A and B and a communicating portion between the vessels C and D were respectively fitted with a cation exchange membrane "CMX-SB" (tradename) available from Atoms Co., Ltd., whereas a communicating portion between the vessels B and C and a communicating portion between the vessels D and E were respectively fitted with an anion exchange membrane "AMX-SB" (tradename) available from Atoms Co., Ltd.
The vessels A and E were respectively charged with a 4% by mass Na₂SO₄ aqueous solution; the vessel B was charged with a 1% by mass NaOH aqueous solution; the vessel C was charged with N,N-diethylmethyl-N-(2-methoxyethyl)ammonium ·bis(trifluoromethanesulfony 1)imide (DEME-TFSI; density ρ: 1.42 g/cm³ (20°C); viscosity η: 0.12 Pa ·s (20°C); conductive); and the vessel D was charged with a 4% by mass MgSO₄ ·7H₂O aqueous solution. The respective solutions were charged in an amount of 30 mL for each into the above chambers.
Platinum electrodes each having a length of 10 mm and a width of 20 mm were used for both an anode and a cathode, and the cathode was inserted into a central portion of the solution filled in the vessel A, whereas the anode was inserted into a central portion of the solution filled in the vessel E.
The temperature of the concentration chamber solution was controlled to from 15 to 25°C, and a D.C. voltage of 8 V was applied to the apparatus over 8 h. Meanwhile, the current value during applying the D.C. voltage was 20 mA.
After completion of the electrodialysis, the resultant product was dispersed and precipitated in the concentration chamber solution, so that the concentration chamber solution became slightly whitely turbid.
Apart of the concentration chamber solution was sampled and mixed with a substantially equal volume of methanol and stirred until forming only one phase. Successively, water having a volume equal to that of methanol previously added was added to the resultant phase and violently stirred for several minutes, and then allowed to stand for 12 h to transfer the dispersed particles into the water phase and agglomerate the particles together therein.
The obtained particles were filtered, washed with methanol and then dried. As a result of the measurement of infrared absorption spectrum, it was confirmed that the particles were magnesium hydroxide [Mg(OH)₂].
The thus obtained magnesium hydroxide particles were added to methyl ethyl ketone such that the concentration of magnesium hydroxide in the resultant mixture was 0.02% by mass, and then dispersed by applying an ultrasonic wave thereto. As a result of the measurement using a laser diffraction type particle size distribution analyzer "MICROTRACK UPA" available from Honeywell Corp., which was conducted assuming that a relative refractive index of the dispersion was 1.56, it was confirmed that the average particle size of the obtained particles was 71 nm.
In addition, a part of the concentration chamber solution was sampled and calcined in air at 500°C for 3 h to remove DEME-TFSI therefrom. From images of the calcined particles obtained by using a scanning electron microscope, it was confirmed that magnesium oxide (MgO) particles having an average particle size of about 30 nm were produced.
Meanwhile, the identification of the magnesium oxide was performed by infrared absorption spectrum of the particles.
Further, when measured by the same method as used in Example 1, it was confirmed that the specific surface area of the resultant particles was 310 m²/g.

### EXAMPLE 15

By using an electrodialysis apparatus "MICROASYLIZER S1 MODEL" (tradename) available from Atoms Inc., fitted with an ion exchange membrane cartridge "AC-220-20" (tradename) available from Atoms Inc., in which the temperature of a concentration chamber solution was adjusted to 20°C, the electrodialysis was carried out for 20 min under the following conditions until a conductivity of a liquid in a desalting chamber reached 0.02 µS.
The structure of the cartridge was the same as shown in Fig. 1.
Electrode chamber solution (chambers A and E): 20 mL of a 4% by mass Na₂SO₄ aqueous solution
Desalting chamber solution (chambers B and D): 20 mL of a 4% by mass NaCl aqueous solution
Concentration chamber solution (chamber C): 10 mL of N,N-diethylmethyl-N-(2-methoxyethyl)ammonium -bis(trifluoromethanesulfony 1)imide (DEME-TFSI); density ρ: 1.42 g/cm³ (20°C); viscosity η: 0.12 Pa·s (20°C); conductive)
Meanwhile, the concentration chamber solution was circulated by a pump.
After initiation of the electrodialysis, a product was obtained with passage of time, so that the concentration chamber solution became whitely turbid.
A part of the concentration chamber solution after completion of the electrodialysis was sampled and calcined in air at 500°C for 3 h to remove DEME-TFSI therefrom.
The resultant solid was dissolved in water, and when subjected to ion chromatography, it was confirmed that the solid was NaCl.
The resultant particles were added to methanol such that the concentration of the particles in the mixture was 0.02% by mass, and then dispersed by applying an ultrasonic wave thereto. As a result of the measurement using a laser diffraction type particle size distribution analyzer "MICROTRACK UPA" (tradename) available from Honeywell Corp., which was conducted assuming that a relative refractive index of the dispersion was 1.51, it was confirmed that the average particle size of the obtained particles was 90 nm.

### EXAMPLE 16

The electrodialysis was carried out in the same manner as in Example 14 except for using a 4% by mass KNO₃ aqueous solution in the vessels B and D.
After initiation of the electrodialysis, a product was obtained with passage of time, so that the concentration chamber solution became whitely turbid.
A part of the concentration chamber solution after completion of the electrodialysis was sampled and calcined in air at 500°C for 3 h to remove DEME-TFSI therefrom.
The resultant solid was dissolved in water, and when subjected to ion chromatography, it was confirmed that the solid was KNO₃.
The resultant particles were added to methanol such that the concentration of the particles in the mixture was 0.02% by mass, and then dispersed by applying an ultrasonic wave thereto. As a result of the measurement using a laser diffraction type particle size distribution analyzer "MICROTRACK UPA" (tradename) available from Honeywell Corp., which was conducted assuming that a relative refractive index of the dispersion was 1.51, it was confirmed that the average particle size of the obtained particles was 20 nm.

### EXAMPLE 17

The electrodialysis was carried out in the same manner as in Example 15 except for using 10 mL of 1-butyl-3-methylimidazolium bis(trifluoromethanesulfonyl)imide (BMI-TFSI; viscosity η: 0.05 Pa·s (25°C); conductive) in the vessel C.
After initiation of the electrodialysis, a product was obtained with passage of time, so that the concentration chamber solution became whitely turbid.
A part of the concentration chamber solution after completion of the electrodialysis was sampled and calcined in air at 500°C for 3 h to remove BMI-TFSI therefrom.
The resultant solid was dissolved in water, and when subjected to ion chromatography, it was confirmed that the solid was NaCl.
The resultant particles were added to methanol such that the concentration of the particles in the mixture was 0.02% by mass, and then dispersed by applying an ultrasonic wave thereto. As a result of the measurement using a laser diffraction type particle size distribution analyzer "MICROTRACK UPA" (tradename) available from Honeywell Corp., which was conducted assuming that a relative refractive index of the dispersion was 1.51, it was confirmed that the average particle size of the obtained particles was 35 nm.

### EXAMPLE 18

The electrodialysis was carried out in the same manner as in Example 14 except for using a 3% by mass FeCl₃ aqueous solution in the vessels B and D.
After initiation of the electrodialysis, a product was obtained with passage of time, so that the concentration chamber solution became tinted brown.
A part of the concentration chamber solution after completion of the electrodialysis was sampled and calcined in air at 500°C for 3 h to remove DEME-TFSI therefrom.
The resultant solid was dissolved in water, and when subjected to measurement of infrared absorption spectrum, it was confirmed that the solid was FeCl₃.
The resultant particles were added to methanol such that the concentration of the particles in the mixture was 0.02% by mass, and then dispersed by applying an ultrasonic wave thereto. As a result of the measurement using a laser diffraction type particle size distribution analyzer "MICROTRACK UPA" (tradename) available from Honeywell Corp., which was conducted assuming that a relative refractive index of the dispersion was 1.51, it was confirmed that the average particle size of the obtained particles was 500 nm.

### EXAMPLE 19

The same procedure as in Example 3 was carried out except for adding 1.0% by mass of stearic acid to the concentration chamber (vessel C) solution.
The concentration chamber solution obtained after completion of the electrodialysis was subjected to filtration under reduce pressure using an OMNIPORE membrane filter (pore size: 0.45 µm) available from Nippon Milli-Pore Co., Ltd., thereby obtaining dark brown copper (II) oxide [CuO] which was produced by oxidizing the hydroxide obtained in the electrodialysis with dissolved oxygen.
The thus obtained copper oxide was added to 25 mL of ethyl alcohol and dispersed therein by ultrasonic irradiation.
The resultant dispersion was subjected to filtration under reduce pressure using the above OMNIPORE membrane filter to remove the DEME-TFSI attached to the copper oxide.
At this time, the filtration under reduced pressure was stopped before the copper oxide was completely dried up.
After further repeating the above washing procedure two times, the copper oxide was dried at 100°C for 3 h, thereby obtaining dark brown copper oxide particles.
After subjecting 0.1 g of the thus obtained copper oxide particles to deaeration treatment at 100°C over 3 h, using a specific surface area measuring apparatus "TRYSTAR 3000" available from Shimadzu Seisakusho Co., Ltd., a nitrogen gas was adsorbed on the surface of the sampled particles, and the specific surface area thereof was measured by a BET multipoint method. As a result, it was confirmed that the specific surface area of the copper oxide particles was 113 m²/g.
In addition, undried copper oxide obtained immediately after the washing was dispersed in ethyl alcohol, and then ethyl alcohol was further added to the resultant dispersion to prepare a dispersion containing the particles at a concentration of 0.2% by mass.
Five milliliters of the dispersion was sampled in a separate container and allowed to stand to evaluate a precipitation rate of the particles. As a result, it was confirmed that even after the elapse of 6 days, only a small number of the particles were precipitated, and a large part of the copper oxide particles were still kept dispersed.
On the other hand, when the dispersion of copper oxide obtained in Example 3 using no dispersant was evaluated by the same method as used above, it was confirmed that all of the particles were precipitated within 6 h.

### EXAMPLE 20

The same procedure as in Example 3 was carried out except for adding 1.0% by mass of polyethylene glycol "PEG2000" available from Nippon Oils & Fats Co., Ltd., to the concentration chamber (vessel C) solution.
The concentration chamber solution obtained after completion of the electrodialysis was subjected to filtration under reduce pressure using an OMNIPORE membrane filter (pore size: 0.45 µm) available from Nippon Milli-Pore Co., Ltd., thereby obtaining dark brown copper (II) oxide [CuO] which was produced by oxidizing the hydroxide obtained in the electrodialysis with dissolved oxygen.
The thus obtained copper oxide was added to 25 mL of ethyl alcohol and dispersed therein by ultrasonic irradiation.
The resultant dispersion was subjected to filtration under reduce pressure using the above OMNIPORE membrane filter to remove the DEME-TFSI attached to the copper oxide.
At this time, the filtration under reduced pressure was stopped before the copper oxide was completely dried up.
After further repeating the above washing procedure two times, the copper oxide was dried at 100°C for 3 h, thereby obtaining dark brown copper oxide particles.
After subjecting 0.1 g of the thus obtained copper oxide particles to deaeration treatment at 100°C over 3 h, using a specific surface area measuring apparatus "TRYSTAR, 3000" available from Shimadzu Seisakusho Co., Ltd., a nitrogen gas was adsorbed on the surface of the sampled particles, and the specific surface area thereof was measured by a BET multipoint method. As a result, it was confirmed that the specific surface area of the copper oxide particles was 122 m²/g.
In addition, undried copper oxide obtained immediately after the washing was dispersed in ethyl alcohol, and then ethyl alcohol was further added to the resultant dispersion to prepare a dispersion containing the particles at a concentration of 0.2% by mass.
Five milliliters of the dispersion was sampled in a separate container and allowed to stand to evaluate a precipitation rate of the particles. As a result, it was confirmed that even after the elapse of 6 days, only a small number of the particles were precipitated, and a large part of the copper oxide particles were still kept dispersed.
On the other hand, when the dispersion of copper oxide obtained in Example 3 using no dispersant was evaluated by the same method as used above, it was confirmed that all of the particles were precipitated within 6 h.

### COMPARATIVE EXAMPLE 1

Copper (II) oxide particles commercially available from Kanto Kagaku Co., Ltd., which were produced by a CVD method, were subjected to the same measurement as conducted in Example 1. As a result, it was confirmed that the copper (II) oxide particles had a specific surface area of 13 m²/g.
In addition, as a result of measuring a small-angle scattering of the copper (II) oxide particles by the same method as used in Example 2, it was confirmed that the copper (II) oxide particles had an average particle size of 24.0 nm and a variance of particle size distribution of 45.9%.

### COMPARATIVE EXAMPLE 2

Iron (III) oxide particles commercially available from Kanto Kagaku Co., Ltd., which were produced by a CVD method, were subjected to the same measurement as conducted in Example 1. As a result, it was confirmed that the iron (III) oxide particles had a specific surface area of 20 m²/g.
In addition, as a result of measuring a small-angle scattering of the iron (III) oxide particles by the same method as used in Example 2, it was confirmed that the iron (III) oxide particles had an average particle size of 25.3 nm and a variance of particle size distribution of 53.5%.

### INDUSTRIAL APPLICABILITY

In accordance with the present invention, when subjecting an electrolytic solution containing salts, hydroxides or oxides to electrodialysis, it is possible to readily produce fine particles of the salts, hydroxides or oxides, in particular, those having a number-average particle size of from 1 nm to 1 µm or a specific surface area of from 1 to 1000 m²/g, with a high purity.
The thus produced salts, hydroxides or oxides can be extensively used in various applications such as cosmetics, catalysts, electronic materials, optical materials, abrasive materials and composite materials.
In addition, in accordance with the present invention, it is possible to efficiently remove and recover the salts contained in the electrolytic solution in the form of a solid.
In particular, valuable ions (such as fluorine, phosphorus, gallium and indium) which have been conventionally discarded can be recovered in the form of a solid salt thereof.
Accordingly, the present invention can be extensively applied to applications using an electrodialysis, such as production of common salt by concentration of seawater, removal of metal ions, desalting of whey and proteins and production of low-salt soy sources.

## Claims

1. A process for producing fine particles of a salt, hydroxide or oxide, wherein when producing the salt, hydroxide or oxide by electrodialysis using anion exchange membranes and cation exchange membranes, a conductive liquid acting as a poor solvent for the salt, hydroxide or oxide which is produced in a concentration chamber is used as a concentration chamber solution.

2. The process according to claim 1, wherein the concentration chamber solution is a liquid exhibiting an electrical conductivity at a temperature of from -10°C to 100°C.

3. The process according to claim 1 or 2, wherein a solubility of the salt, hydroxide or oxide which is produced in the concentration chamber, in the concentration chamber solution as measured at a temperature used upon the electrodialysis is 10 g/100 g or less.

4. The process according to any one of claims 1 to 3, wherein the concentration chamber solution is a liquid containing an ion liquid.

5. The process according to claim 4, wherein the ion liquid is diethylmethyl(2-methoxyethyl)ammonium-bis(trifluoromethanesulfonyl)imide, 1-butyl-3-methylimidazolium-bis(trifluoromethanesulfonyl)imide, tetraoctylammoniumdodecyl sulfate or diethylmethyl(2-methoxyethyl) ammonium chloride.

6. The process according to claim 4 or 5, wherein the liquid containing the ion liquid is a solution containing the ion liquid in an amount of 5% by mass or more.

7. The process according to claim 6, wherein the liquid containing the ion liquid is a solution containing a C₁ to C₃ lower alcohol in an amount of 25% by mass or more.

8. The process according to any one of claims 4 to 6, comprising the steps of adding the C₁ to C₃ lower alcohol to the concentration chamber solution obtained after the electrodialysis; mixing the obtained mixture under stirring; and then separating the salt, hydroxide or oxide as produced, from the concentration chamber solution by filtration, centrifugal separation and/or heating.

9. The process according to any one of claims 4 to 6, wherein the concentration chamber solution is a liquid containing a hydrophobic ion liquid, and a solubility in 20°C water of the salt, hydroxide or oxide which is produced in the concentration chamber is 10 g/100 g or less,
said process comprising the steps of adding water to the concentration chamber solution obtained after the electrodialysis; mixing the resultant mixture under stirring; allowing the mixture to stand to separate the mixture into a phase of the concentration chamber solution and a water phase; and separating the salt, hydroxide or oxide which is transferred into the water phase, from the water phase by filtration, centrifugal separation and/or heating.

10. The process according to any one of claims 4 to 6, wherein the concentration chamber solution is a liquid containing a hydrophobic ion liquid, and a solubility in 20°C water of the salt, hydroxide or oxide which is produced in the concentration chamber is 10 g/100 g or less,
said process comprising the steps of first adding the C₁ to C₃ lower alcohol to the concentration chamber solution obtained after the electrodialysis; mixing the resultant mixture under stirring; then adding water to the mixture; mixing the mixture under stirring; allowing the mixture to stand to separate the mixture into a phase of the concentration chamber solution and a water phase; and separating the salt, hydroxide or oxide which is transferred into the water phase, from the water phase by filtration and/or heating.

11. The process according to claim 7, wherein the salt, hydroxide or oxide is separated from the concentration chamber solution obtained after the electrodialysis by filtration, centrifugal separation and/or heating.

12. The process for producing the fine particles of the water-insoluble or hardly water-soluble salt, hydroxide or oxide according to claim 9 or 10, wherein the water-insoluble or hardly water-soluble salt, hydroxide or oxide is a compound of an element selected from the group consisting of elements belonging to Group 2 and Groups 6 to 14 of the Periodic Table and lanthanoid elements.

13. The process according to any one of claims 4 to 12, wherein the salt, hydroxide or oxide which is produced in the concentration chamber is a salt, hydroxide or oxide of an element selected from the group consisting of magnesium, manganese, iron, cobalt, nickel, silver, copper, zinc, aluminum, indium, tin and cerium.

14. The process according to any one of claims 4 to 13, wherein the salt produced in the concentration chamber is a compound selected from the group consisting of a halide, a nitrate, a nitrite, a sulfate, a sulfite, a thiosulfate, a phosphate, an oxalate, a carbonate and an acetate.

15. The process according to claim 14, wherein the salt produced in the concentration chamber is sodium chloride, potassium nitrate, calcium carbonate, calcium sulfate, barium carbonate, barium sulfate or calcium phosphate.

16. The process according to any one of claims 4 to 15, wherein the salt, hydroxide or oxide has a number-average particle size of from 1 nm to 1 µm as measured by a laser diffraction method, or a specific surface area of from 1 to 1000 m²/g as measured by a BET multipoint method.

17. The fine particles of the salt, hydroxide or oxide produced by the process as defined in any one of claims 4 to 16, wherein the fine particles of the salt, hydroxide or oxide have a specific surface area of 100 m²/g or larger as measured by a BET multipoint method, an average particle size of 50 nm or smaller as measured in a particle size distribution of the particles in terms of a volume thereof by subjecting a strength function of the particles obtained by a small-angle X-ray scattering method, to a fitting procedure using a non-linear method of least squares, and a variance of particle size distribution of 60% or less.

18. The fine particles according to claim 17, wherein the salt, hydroxide or oxide is a compound of an element selected from the group consisting of elements belonging to Group 2 and Groups 6 to 14 of the Periodic Table and lanthanoid elements.

19. The fine particles according to claim 17 or 18, wherein the oxide is copper (II) oxide.

20. The fine particles according to claim 17 or 18, wherein the oxide is iron (III) oxide.

21. The fine particles according to claim 17 or 18, wherein the oxide is trimanganese tetraoxide.

## Amended claims

### Amended claims under Art. 19.1 PCT

**1.** A process for producing fine particles of a salt, hydroxide or oxide, wherein when producing the salt, hydroxide or oxide by electrodialysis using anion exchange membranes and cation exchange membranes, a conductive liquid acting as a poor solvent for the salt, hydroxide or oxide which is produced in a concentration chamber is used as a concentration chamber solution.

**2.** The process according to claim 1, wherein the concentration chamber solution is a liquid exhibiting an electrical conductivity at a temperature of from -10°C to 100°C.

**3.** The process according to claim 1 or 2, wherein a solubility of the salt, hydroxide or oxide which is produced in the concentration chamber, in the concentration chamber solution as measured at a temperature used upon the electrodialysis is 10 g/100 g or less.

**4.** The process according to any one of claims 1 to 3, wherein the concentration chamber solution is a liquid containing an ion liquid.

**5.** The process according to claim 4, wherein the ion liquid is diethylmethyl(2-methoxyethyDammonium-bis(trifluoromethanesulfonyl)imide, 1-butyl-3-methylimidazolium-bis(trifluoromethanesulfonyl)imide, tetraoctylammoniumdodecyl sulfate or diethylmethyl(2-methoxyethyl) ammonium chloride.

**6.** The process according to claim 4 or 5, wherein the liquid containing the ion liquid is a solution containing the ion liquid in an amount of 5% by mass or more.

**7.** The process according to claim 6, wherein the liquid containing the ion liquid is a solution containing a C₁ to C₃ lower alcohol in an amount of 25% by mass or more.

**8.** The process according to any one of claims 4 to 6, comprising the steps of adding the C₁ to C₃ lower alcohol to the concentration chamber solution obtained after the electrodialysis; mixing the obtained mixture under stirring; and then separating the salt, hydroxide or oxide as produced, from the concentration chamber solution by filtration, centrifugal separation and/or heating.

**9.** The process according to any one of claims 4 to 6, wherein the concentration chamber solution is a liquid containing a hydrophobic ion liquid, and a solubility in 20°C water of the salt, hydroxide or oxide which is produced in the concentration chamber is 10 g/100 g or less,
said process comprising the steps of adding water to the concentration chamber solution obtained after the electrodialysis; mixing the resultant mixture under stirring; allowing the mixture to stand to separate the mixture into a phase of the concentration chamber solution and a water phase; and separating the salt, hydroxide or oxide which is transferred into the water phase, from the water phase by filtration, centrifugal separation and/or heating.

**10.** The process according to any one of claims 4 to 6, wherein the concentration chamber solution is a liquid containing a hydrophobic ion liquid, and a solubility in 20°C water of the salt, hydroxide or oxide which is produced in the concentration chamber is 10 g/100 g or less,
said process comprising the steps of first adding the C₁ to C₃ lower alcohol to the concentration chamber solution obtained after the electrodialysis; mixing the resultant mixture under stirring; then adding water to the mixture; mixing the mixture under stirring; allowing the mixture to stand to separate the mixture into a phase of the concentration chamber solution and a water phase; and separating the salt, hydroxide or oxide which is transferred into the water phase, from the water phase by filtration and/or heating.

**11.** The process according to claim 7, wherein the salt, hydroxide or oxide is separated from the concentration chamber solution obtained after the electrodialysis by filtration, centrifugal separation and/or heating.

**12.** The process for producing the fine particles of the water-insoluble or hardly water-soluble salt, hydroxide or oxide according to claim 9 or 10, wherein the water-insoluble or hardly water-soluble salt, hydroxide or oxide is a compound of an element selected from the group consisting of elements belonging to Group 2 and Groups 6 to 14 of the Periodic Table and lanthanoid elements.

**13.** The process according to any one of claims 4 to 12, wherein the salt, hydroxide or oxide which is produced in the concentration chamber is a salt, hydroxide or oxide of an element selected from the group consisting of magnesium, manganese, iron, cobalt, nickel, silver, copper, zinc, aluminum, indium, tin and cerium.

**14.** The process according to any one of claims 4 to 13, wherein the salt produced in the concentration chamber is a compound selected from the group consisting of a halide, a nitrate, a nitrite, a sulfate, a sulfite, a thiosulfate, a phosphate, an oxalate, a carbonate and an acetate.

**15.** The process according to claim 14, wherein the salt produced in the concentration chamber is sodium chloride, potassium nitrate, calcium carbonate, calcium sulfate, barium carbonate, barium sulfate or calcium phosphate.

**16.** The process according to any one of claims 4 to 15, wherein the salt, hydroxide or oxide has a number-average particle size of from 1 nm to 1 µm as measured by a laser diffraction method, or a specific surface area of from 1 to 1000 m²/g as measured by a BET multipoint method.

**17.** (Amended) A salt, hydroxide or oxide wherein particles of the salt, hydroxide or oxide have a specific surface area of from 100 to 1,000 m²/g as measured by a BET multipoint method, an average particle size of from 1 to 50 nm as measured in a particle size distribution of the particles in terms of a volume thereof by subjecting a strength function of the particles obtained by a small-angle X-ray scattering method, to a fitting procedure using a non-linear method of least squares, and a variance of particle size distribution of 60% or less.

**18.** (Amended) The salt, hydroxide or oxide according to claim 17, wherein the salt, hydroxide or oxide is a compound of an element selected from the group consisting of elements belonging to Group 2 and Groups 6 to 14 of the Periodic Table and lanthanoid elements.

**19.** (Amended) The salt, hydroxide or oxide according to claim 17 or 18, wherein the oxide is copper (II) oxide.

**20.** (Amended) The salt, hydroxide or oxide according to claim 17 or 18, wherein the oxide is iron (III) oxide.

**21.** (Amended) The salt, hydroxide or oxide according to claim 17 or 18, wherein the oxide is trimanganese tetraoxide.
